# EUROPEAN PATENT APPLICATION

(11) **EP 4 451 048 A1**
(43) Date of publication of application: **23.10.2024**
(21) Application number: 24168951.2
(22) Date of filing: 08.04.2024
(51) Int. Cl.: G02F 1/1333, G02F 1/1339

(54) **LIQUID CRYSTAL PACKAGE AND MANUFACTURING METHOD FOR SAME, OPTICAL STACK INCLUDING SAME, AND SMART WINDOW INCLUDING SAME**

(30) Priority: 21.04.2023 KR 20230052525
(71) Applicant: Dongwoo Fine-Chem Co., Ltd., Iksan-si, Jeollabuk-do 54631 (KR)
(72) Inventor: KIM, Hyung-Hun, 54631 Jeollabuk-do (KR); KIM, Jin-Ho, 54631 Jeollabuk-do (KR); HEO, Sub, 54631 Jeollabuk-do (KR)
(74) Representative: Betten & Resch

(57) **Abstract**

A liquid crystal package and a manufacturing method for the same, and an optical stack including the same, and a smart window including the same are proposed. The liquid crystal package includes a first protective film, a first alignment film formed on one surface of a first protective film, a second protective film opposing the first protective film, a second alignment film formed on one surface of the second protective film, and opposing the first alignment film, and a liquid crystal layer provided between the first alignment film and the second alignment film, and has a sealed structure with an outer circumferential surface thereof sealed.

## Description

### BACKGROUND OF THE INVENTION

### Field of the Invention

The present disclosure relates to a liquid crystal package and a method for manufacturing the same, an optical stack including the same, and a smart window including the same.

### Description of the Related Art

In general, there are many cases in which an external light blocking coating is applied to a window of a means of transportation such as a vehicle. However, the transmittance of a conventional window of a means of transportation is fixed, and the transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is driven by changing the transmittance by driving liquid crystal according to voltage application. The variable transmittance optical stack developed so far is manufactured by forming a liquid crystal layer at a region defined by an upper stack, a lower stack, and a sealant, and forming a conductive layer for driving the liquid crystal on a separate or additional substrate, and then coupling the conductive layer to other elements such as a polarizing plate, etc.

For example, Japanese Patent Publication Application No. 2018-010035 discloses the variable transmittance optical stack including a liquid crystal layer formed at a region defined by an upper stack, a lower stack, a sealing material, and a transparent electrode layer formed on a polycarbonate (PC) substrate, etc. having a predetermined thickness.

However, when a sealant is included to provide a space with the liquid crystal layer as described above, the height of the sealant is not compressed sufficiently when joining the upper stack and the lower stack, causing problems in that product defects such as gap non-uniformity or sealant tear occur. Furthermore, when a separate or additional substrate is included to form a conductive layer, there are problems of increasing manufacturing costs due to complication of a manufacturing process, thickening the thickness of the stack, and changing the transmittance due to occurrence of phase difference.

Accordingly, there is a need to develop a variable transmittance optical stack capable of preventing defective products occurring due to provision of a sealant, and capable of simplifying a manufacturing process and reducing the thickness by not including a separate or additional substrate for formation of a conductive layer.

### Documents of Related Art

(Patent Document 1) Japan Patent Application Publication No. 2018-010035

### SUMMARY OF THE INVENTION

The present disclosure is intended to minimize product defects due to gap non-uniformity or sealant tear that occur when a sealant is included to form a liquid crystal layer.

Another objective of the present disclosure is to solve a problem of increasing manufacturing costs as a separate or additional substrate is included to form a conductive layer, and to improve product quality such as thinning of a product or improvement of the transmittance.

However, the problem to be solved by the present disclosure is not limited to the problems mentioned above, and other problems not mentioned will be clearly understood by those skilled in the art from the description below.

The present disclosure relates to a liquid crystal package including: a first protective film; a first alignment film formed on one surface of the first protective film; a second protective film opposing the first protective film; a second alignment film formed on one surface of the second protective film, and opposing the first alignment film; and a liquid crystal layer provided between the first alignment film and the second alignment film, wherein the liquid crystal package may have a sealed structure with an outer circumferential surface thereof sealed.

In a first aspect of the present disclosure, the sealed structure may be achieved by thermosetting sealing.

In a second aspect of the present disclosure, at least a part of regions of the sealed outer circumferential surface may have a form protruding outwards from the liquid crystal package.

In a third aspect of the present disclosure, at least a part of regions of the sealed outer circumferential surface may have a form that is curved to form a curved surface on the outer circumferential surface of the liquid crystal package.

In a fourth aspect of the present disclosure, at least one of the first and protective films may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

In a fifth aspect of the present disclosure, at least one protective film from among the first protective film and the second protective film may have a thickness less than or equal to 50µm.

Furthermore, the present disclosure relates to a manufacturing method for the liquid crystal package.

Furthermore, the present disclosure relates to a variable transmittance optical stack including: a first transparent conductive layer and a first polarizing plate that are stacked on an upper surface of the first protective film; and a second transparent conductive layer and a second polarizing plate that are stacked on an upper surface of the second protective film.

In a sixth aspect of the present disclosure, at least one transparent conductive layer from among the first transparent conductive layer and the second transparent conductive layer may be formed to come into direct contact with one polarizing plate from among the first polarizing plate and second polarizing plate.

In a seventh aspect of the present disclosure, at least one transparent conductive layer of the first transparent conductive layer and the second transparent conductive layer may include one or more types selected from a group consisting of transparent conductive oxide, metal, carbonaceous materials, conductive polymers, conductive ink, and nanowires.

In an eighth aspect of the present disclosure, at least one polarizing plate from among the first polarizing plate and the second polarizing plate may include one or more types selected from a group consisting of a protective layer, a retardation matching layer, and a refractive index-matching layer.

In a ninth aspect of the present disclosure, at least one polarizing plate from among the first polarizing plate and the second polarizing plate may have a thickness ranging from 30 to 200µm.

In a tenth aspect of the present disclosure, the variable transmittance optical stack may include: one or more types selected from a group consisting of an overcoat layer, a pressure sensitive adhesive/adhesive layer, and an ultraviolet ray absorption layer.

Furthermore, the present disclosure relates to a smart window including the variable transmittance optical stack.

Furthermore, the present disclosure relates to a means of transportation including the smart window.

Furthermore, the present disclosure relates to a vehicle including the smart window applied to at least one from among front windows, rear windows, side windows, sunroof windows, and inner partitions.

Furthermore, the present disclosure relates to a wearable device or a window and door for a building including the smart window.

According to the present disclosure, as the liquid crystal package does not include a sealant, the liquid crystal package has the advantage in that product defects such as gap non-uniformity or sealant tear due to defective sealant compression do not occur.

Furthermore, according to the present disclosure, as the variable transmittance optical stack has the conductive layer formed directly on one surface of the polarizing plate without including a separate or additional substrate for formation of the conductive layer, the variable transmittance optical stack has the advantage in an aspect of thinning of the stack or improvement of the transmittance.

### BRIEF DESCRIPTION OF THE DRAWINGS

FIGS. 1 and 2 are views showing a liquid crystal package according to one or multiple embodiments of the present disclosure.
FIGS. 3A to 3C are views showing a manufacturing process for the liquid crystal package according to an embodiment of the present disclosure.
FIG. 4 is a view showing a variable transmittance optical stack according to an embodiment of the present disclosure.
FIG. 5 is a stack structure of a smart window according to an embodiment of the present disclosure.

### DETAILED DESCRIPTION OF THE DISCLOSURE

The present disclosure includes a liquid crystal package and a manufacturing method for the same, the liquid crystal package being formed without a sealant for forming a liquid crystal layer, thereby preventing a technical problem that may occur when the sealant is included, for example, product defects due to gap non-uniformity or sealant tear due to defective sealant compression; and the liquid crystal package.

More specifically, the present disclosure relates to a variable transmittance optical stack, which is formed by directly forming a conductive layer for driving liquid crystals on one surface of a polarizing plate so that the thickness of the stack is reduced and the transmittance in a light transmissive mode is improved because a separate or additional substrate for forming the conductive layer is not included.

More specifically, the present disclosure relates to a liquid crystal package and a manufacturing method for the same, and a variable transmittance optical stack including the same, wherein the liquid crystal package includes: a first protective film; a first alignment film formed on one surface of the first protective film; a second protective film opposing the first protective film; a second alignment film formed on one surface of the second protective film, and opposing the first alignment film; and a liquid crystal layer provided between the first alignment film and the second alignment film, and the liquid crystal package has a sealed structure with an outer circumferential surface thereof sealed.

The variable transmittance optical stack of the present disclosure including the liquid crystal package is particularly suitable for technical fields where light transmittance can changes in response to application of voltage, for example, it may be used for a smart window.

The smart window is an optical structure controlling the amount of light or heat passing through the window by changing light transmittance in response to an electrical signal. In other words, the smart window is provided to be changed into a transparent, opaque or translucent state by voltage and is called as variable transmittance glass, lighting control glass, or smart glass.

The smart window may be used as partitions for partitioning an internal space of vehicles and buildings or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since a conductive layer is directly formed in a polarizing plate, there is no need to include a separate or additional substrate for forming the conductive layer and the thickness thereof is thin and is advantageous in the flexuosity, so the optical stack of the present disclosure may be used to be particularly suitable for a smart window of a vehicle or a building. According to one or multiple embodiments, the smart window to which the variable transmittance optical stack of the present disclosure is applied may be used for front windows, rear windows, side windows and sunroof windows of a means of transportation, for example, a vehicle or for a window and door for a building. In addition to the use of blocking external light, the smart window may be used for an internal space partitioning use or a privacy protecting use such as an inner partition for a vehicle or a building, and may be used for wearable devices such as helmets, glasses, or watches.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate from among the first polarizing plate and the second polarizing plate, and "the transparent conductive layer" may mean at least one transparent conductive layer from among the first transparent conductive layer and the second transparent conductive layer, and "the protective film" may mean at least one protective film from among the first protective film and the second protective film, and "the alignment film" may mean at least one alignment film from among the first alignment film and the second alignment film.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

As used herein, "planar direction" may be interpreted as a direction of a thickness of a polarizing plate and/or a transparent conductive layer, that is, a direction viewed from the user's view side.

As used herein, "substantially" may be interpreted to include not only being physically completely identical, but also within an error range of measurement or manufacturing process, for example, may be interpreted as having an error range of 1% or less.

### < The liquid crystal package >

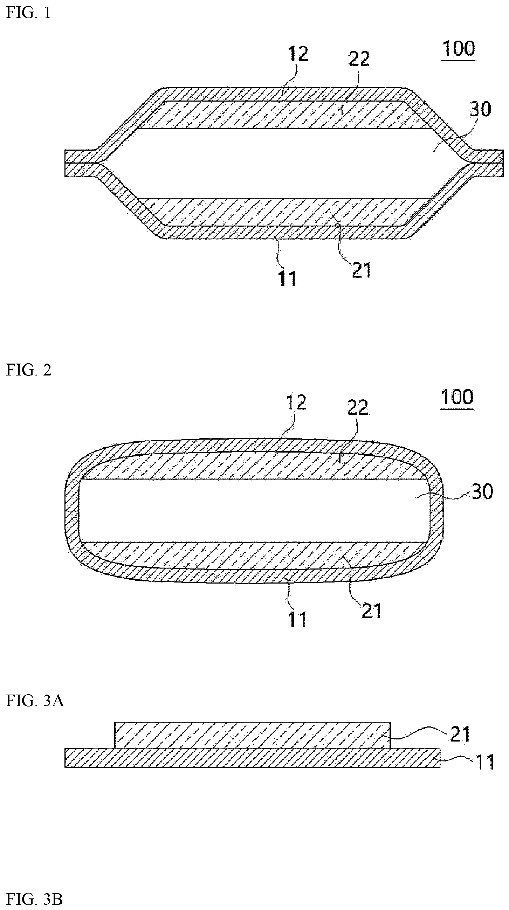

FIGS. 1 and 2 are views showing a liquid crystal package according to one or multiple embodiments of the present disclosure.

Referring to FIGS. 1 and 2, according to an embodiment of the present disclosure, a liquid crystal package 100 may include a first protective film 11, a second protective film 12, a first alignment film 21, a second alignment film 22, and a liquid crystal layer 30.

The protective film 11, 12 may provide a structural base for the formation of the alignment film 21, 22 and the liquid crystal layer 30, and may serve as a member forming a structure sealed by a sealing as described below.

The protective film 11, 12 may be used as a form of a single layer as shown in FIGS. 1 and 2, but the present disclosure is not limited thereto, and the protective film 11, 12 may be used as a form of multiple layers with two or more protective films successively stacked together.

According to one or multiple embodiments, the protective film 11, 12 may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP), and in terms of obtainability and convenience in manufacturing, polyethylene terephthalate (PET), triacetyl cellulose (TAC), polycarbonate (PC), and cyclic olefin polymer (COP) may be preferably used.

According to one or multiple embodiments, the protective film 11, 12 may have the thickness less than or equal to 50µm, preferably the thickness ranging from 1 to 30µm, more preferably the thickness ranging from 1 to 10µm. When the thickness of the protective film is excessively less, the durability of the liquid crystal package itself may be reduced, or it is difficult to form a sealed structure formed by a sealing process to be described below. When the thickness of the protective film is excessively thick, a distance between transparent conductive layers arranged outside the liquid crystal package for the formation of the variable transmittance optical stack to be described is excessively long, and thus it may be difficult to efficiently activate the optical stack.

The alignment film 21, 22 may be located inside the liquid crystal package based on the protective film 11, 12 to give orientation to a liquid crystal compound provided in the liquid crystal layer 30.

The alignment film 21, 22 is not particularly limited as long as it adds the orientation to the liquid crystal compound, and for example, a physical alignment film or an optical alignment film may be used.

The physical alignment film may mean the alignment film applied with an oriented material such as polyimide (PI), etc., and then given the orientation by a rubbing process.

The optical alignment film may include photoalignable or photocurable polymer, etc. For example, the optical alignment film may be manufactured by coating and hardening composition for alignment layer coating containing aligned polymers, photopolymerization initiators, and solvent photoalignable or photocurable polymer, photopolymerization initiators, and solvent.

The photoalignable or photocurable polymer is not particularly limited, but may use cinnamate polymer, polyimide polymer, etc., for example, may use poly (vinyl cinnamate) (PVCi), poly (siloxane cinnamate) (PSCN), poly (ω(4-chalconyloxy) alkoxyphenylmaleimide, 6-FDA-HAB-Cl, etc., and may use a polymer currently developed or to be developed, which can exert the orientation.

According to one or multiple embodiments, the alignment film 21, 22 may have the thickness ranging from 30 to 100nm, more preferably the thickness ranging from 50 to 100nm. When the thickness of the alignment film satisfies the above range, it is easy to give the orientation to the liquid crystal compounds, and there may be an advantage in terms of thinning the liquid crystal package.

The liquid crystal layer 30 may adjust transmittance of light incident in one or multiple directions in response to an electric field to be coupled to the polarizing plate to be described below to change a driving mode of the optical stack.

The liquid crystal layer 30 may include the liquid crystal compound (not shown) and a spacer (not shown), for example, may be disposed between the first alignment film 21 and the second alignment film 22 that are provided between the first protective film 11 and the second protective film 12, and according to some embodiments, the liquid crystal layer may provide an interface with an inner wall of the protective film bonded by sealing.

The liquid crystal compound may be driven in response to an electric field, and are not particularly limited as long as it can control the transmittance of light, and the liquid crystal compound currently developed or to be developed may be used thereto.

For example, the liquid crystal compound may mean a compound including mesogen frame, etc., and also including one or more polymerizable functional groups. The liquid crystal compound is variously known by the name reactive mesogen (RM). The liquid crystal compound may constitute a cured film with a polymer network formed while being polymerized by light or heat and maintaining a liquid crystal arrangement.

The liquid crystal compound may be mono-functional reactive liquid crystal compound or multi-functional reactive liquid crystal compound. The mono-functional reactive liquid crystal compounds may mean a compound having 1 polymerizable functional group, and the multi-functional reactive liquid crystal compounds may mean a compound having two or more polymerizable functional groups.

A liquid crystal movement method of the liquid crystal compound is not particularly limited and, for example, a twisted nematic (TN) mode, a super twisted nematic (STN) mode, a vertical alignment (VA) mode, an electrically controlled birefringence (ECB) mode, etc. may be used.

The spacer may include at least one or more spacers among a ball spacer and a column spacer, and specifically, may preferably be a ball spacer. The ball spacer may include one or more ball spaces, and preferably has the diameter ranging from 1 to 10 µm. Furthermore, when viewed in a planar direction, an area where the ball spacer is occupied in the liquid crystal layer is preferably ranging from 0.01 to 10% of the area of the liquid crystal layer in an aspect of improvement of user's visibility and transmittance in a light transmissive mode.

According to the embodiment, the liquid crystal package 100 of the present disclosure may have a sealed structure with an outer circumferential surface sealed, and for example, the sealed structure may be performed in a thermosetting sealing manner.

A form of the outer circumferential surface of the sealed structure is not particularly limited, and for example, as shown in FIG. 1, may have a form protruding, at least some regions, outwards from the liquid crystal package 100. Furthermore, as shown in FIG. 2, the form may be curved so that a curved surface is formed on the outer circumferential surface of the liquid crystal package 100.

According to the liquid crystal package 100 of the present disclosure, it is not necessary to include a sealant for formation of the liquid crystal layer 30, the liquid crystal package 100 has the advantage in that product defects due to gap non-uniformity or sealant tear due to defective sealant compression do not occur.

FIGS. 3A to 3C are views showing a manufacturing process for the liquid crystal package according to an embodiment of the present disclosure.

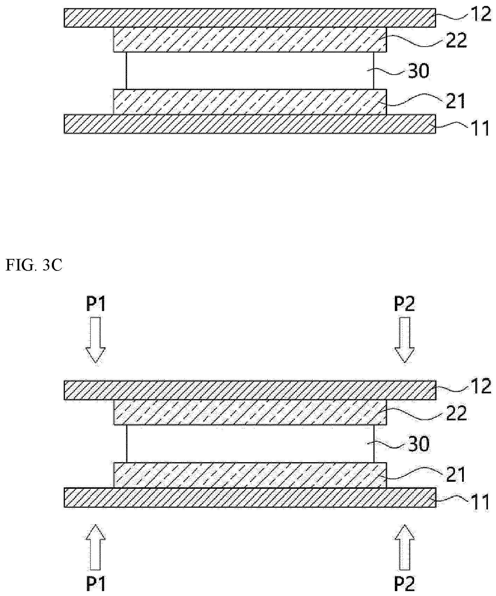

Referring to FIG. 3, according to the embodiment of the present disclosure, the manufacturing process for the liquid crystal package may include: manufacturing a first stack and a second stack (S1, referring to FIG. 3A); forming the liquid crystal layer 30 between the first stack and the second stack (S2, referring to FIG. 3B); and sealing the outer circumferential surface by the sealing process (S3, referring to FIG. 3C).

The manufacturing at S1 may be performed by forming the first alignment film 21 on one surface of the first protective film 11 to manufacture the first stack.

As described above, the first alignment film 21 may be formed by applying a composition for formation of the physical alignment film and performing the rubbing process, and by applying and drying a composition for formation of the optical alignment film and then radiating UV on the dried piece.

According to the embodiment, to improve adhesion between the first protective film 11 and the first alignment film 21, the first alignment film 21 may be formed after a pre-processing such as corona processing or plasma processing is performed on one surface of the first protective film 11 where the first alignment film 21 is formed.

According to the embodiment, the first alignment film 21 may be formed to have a width less than a width of the first protective film 11 so that the first alignment film 21 has an area less than an area of the first protective film 11. Preferably, the first alignment film 21 may be formed without being located at an outer end portion of the first protective film 11. When the first alignment film 21 is formed as described above, the processability can be further improved in the sealing of the outer circumferential surface by sealing the protective film 11, 12 in the sealing at S3.

Meanwhile, FIG. 3A does not show the second stack 12, 22, but the second stack 12, 22 may also be manufactured in substantially the same method as the first stack.

The forming at S2 may be performed by forming the liquid crystal layer 30 by injecting a composition for formation of the liquid crystal layer between the first stack and the second stack.

According to the embodiment, the liquid crystal layer 30 may be formed by injecting a composition for formation of the liquid crystal layer into the first alignment film 21 of the first stack in a method of one drop filling (ODF), and then press-bonding the first stack and the second stack 12, 22 to each other by a predetermined pressure. The pressure for bonding the first stack and the second stack 12, 22 is not particularly limited, but may range from 1.0 to 3.0 kg/cm2, more preferably may range from 1.5 to 2.0 kg/cm2.

According to the embodiment, the forming at S2 may include dispersing the ball spacers, before injecting a composition for formation of the liquid crystal layer to form the liquid crystal layer 30.

A method of dispersing the ball spacers is not particularly limited and, for example, may be performed by forming a mixed solvent formed by mixing ball spacers to a solvent such as IPA, etc., and then dispersing the ball spacers on a lower stack, for example, the first alignment film 21 of the first stack .

According to another embodiment, a composition for formation of the liquid crystal layer may include the ball spacers and, in this case, the dispersing of the ball spacers may be omitted.

The sealing at S3 may be performed by manufacturing the liquid crystal package by sealing the protective film 11, 12 by the sealing process.

According to the embodiment, the sealing process may be performed by thermosetting-sealing and, in this case, may be performed by heating and pressing the first protective film 11 and the second protective film 12.

The performing temperature of the thermosetting-sealing may be appropriately selected by a user depending on a type of protective films and, for example, the temperature may range from 30 to 400°C, preferably may range from 50 to 380°C.

According to the embodiment, the pressing may be performed by applying pressure P1, P2 to a part corresponding to each outer end portion of the first protective film 11 and each outer end portion of the second protective film 12.

The pressure P1 applied to the first outer end portions of the first protective film 11 and the second protective film 12 and the pressure P2 applied to the second outer end portions are substantially equal to each other, or even when the pressures are different from each other, it is preferable that the pressures have a relatively small difference.

### < The variable transmittance optical stack >

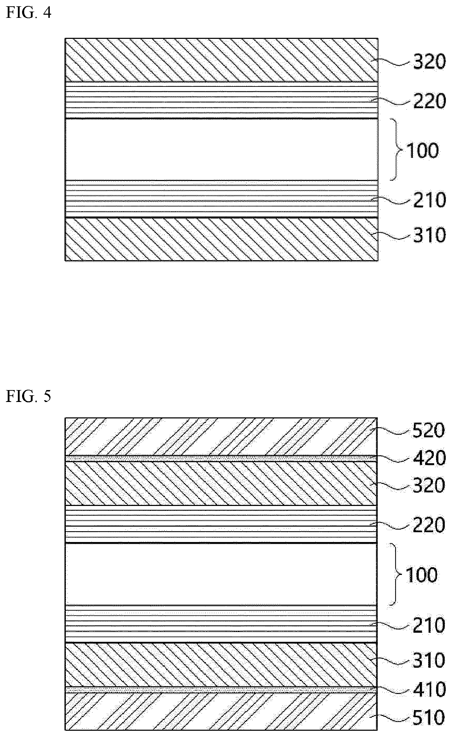

FIG. 4 is a view showing a variable transmittance optical stack according to an embodiment of the present disclosure.

Referring to FIG. 4, the variable transmittance optical stack according to the embodiment of the present disclosure may include: the liquid crystal package 100 described above, a first transparent conductive layer 210, a second transparent conductive layer 220, a first polarizing plate 310, and a second polarizing plate 320. For example, the first transparent conductive layer 210 and the first polarizing plate 310 may be successively stacked on an upper surface of the first protective film 11 provided at the liquid crystal package 100, or the first polarizing plate 310 and the first transparent conductive layer 210 may be successively stacked on an upper surface of the first protective film 11 provided at the liquid crystal package 100. Further, the second transparent conductive layer 220 and the second polarizing plate 320 may be successively stacked on an upper surface of the second protective film 12, or the second polarizing plate 320 and the second transparent conductive layer 220 may be successively stacked on an upper surface of the second protective film 12.

The transparent conductive layer 210, 220 is provided to drive the liquid crystal layer 30 provided in the liquid crystal package 100, and may be formed to come into direct contact with the polarizing plate 310, 320. For example, as shown in FIG. 4, the first transparent conductive layer 210 and the second transparent conductive layer 220 may be formed to come into direct contact with the first polarizing plate 310 and the second polarizing plate 320.

The optical stack used to manufacturing of a conventional smart window, etc. is manufactured by forming a conductive layer for driving liquid crystals on a first surface of a substrate, and bonding a second surface of the substrate with the polarizing plate. However, the variable transmittance optical stack according to the present disclosure does not include a separate or additional substrate for formation of a conductive layer, and is characterized in that a conductive layer is directly formed on one surface of the polarizing plate to reduce the thickness of the stack and to improve the transmittance in the light transmissive mode and the flexuosity.

According to the embodiment, the transparent conductive layer 210, 220 may be formed by directly depositing on one surface of the polarizing plate 310, 320. At this point, to improve adhesion between the transparent conductive layer 210, 220 and the polarizing plate 310, 320, after performing pre-processing such as corona processing or plasma processing on one surface of the polarizing plate 310, 320, the transparent conductive layer 210, 220 may be formed to come into direct contact with the surface of the polarizing plate 310, 320 where the pre-processing is performed. The pre-processing is not limited to the corona processing or plasma processing, and within a range without affecting the objective of the present disclosure, pre-processing currently developed or to be developed may be used.

According to another embodiment, to improve adhesion between the transparent conductive layer 210, 220 and the polarizing plate 310, 320, the transparent conductive layer 210, 220 may be formed to come into direct contact with the polarizing plate 310, 320, with a highly adhesive layer (not shown) provided on one surface of the polarizing plate 310, 320 located therebetween.

Preferably, the transparent conductive layer 210, 220 has the transmittance with respect to visible light of 50% or more and, for example, the transparent conductive layer 210, 220 may include one or more types selected from a group consisting of transparent conductive oxide, metal, a carbonaceous material, conductive polymer, conductive ink, and nanowires, but the present disclosure is not limited thereto, and a material of a transparent conductive layer developed before or later may be used.

According to one or multiple embodiments, the transparent conductive oxide may include one or more kinds selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, the metal may include argentum - palladium - cuprum (APC) alloy or cuprum - calcium (CuCa) alloy. The carbonaceous matter may include one or more types selected from a group consisting of carbon nanotubes (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 210, 220 may be formed into a structure of two or more layers while combining the above matters. For example, in order to reduce the reflectance of incident light and increase the transmittance, the transparent conductive layer may be formed in a structure of two layers including a metal layer and a transparent conductive oxide layer.

The transparent conductive layer 210, 220 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The polarizing plate 310, 320 includes a polarizer (not shown), and the retardation matching layer, the refractive index-matching layer, etc. may be included on one or both surfaces of the polarizer, a functional layer such as the protective layer. For example, the polarizing plate 310, 320 may include the polarizer, and the protective layer stacked on one or both surfaces of the polarizer; include the polarizer, the protective layer stacked on a first surface of the polarizer, and the retardation matching layer stacked on a second surface opposing the first surface of the polarizer; include the polarizer, the protective layer stacked on a first surface of the polarizer, and the retardation matching layer and the refractive index-matching layer that are successively stacked on a second surface opposing the first surface of the polarizer; and include the polarizer, the protective layer stacked on a first surface of the polarizer, and the protective layer and the retardation matching layer that are successively stacked on a second surface opposing the first surface of the polarizer.

The polarizer may be a polarizer currently developed or to be developed, and for example be a stretched polarizer, a coated polarizer, etc.

According to the embodiment, the stretched polarizer may include a stretched polyvinyl alcohol (PVA) based resin. The PVA based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the PVA based resin. As the other monomers, unsaturated carboxylic acid based monomers, unsaturated sulfonic acid based monomers, olefin based monomers, vinyl ether based monomers, acrylamide having ammonium groups-based monomers, and the like may be used. Furthermore, the PVA based resin contains a denatured resin, and for example, may be polyvinyl formal or polyvinyl acetal denatured into aldehyde.

According to the embodiment, the coated polarizer may be formed of a composition for liquid crystal coating. At this point, the composition for liquid crystal coating may contain reactive liquid crystal compound, and dichroic dye, etc.

The reactive liquid crystal compound is not particularly limited as long as it is driven according to electric fields and can control the transmittance of limit, and may be substantially equal to the description of the liquid crystal compounds of the liquid crystal layer described above.

The dichroic dye is a substance contained in the composition for liquid crystal coating to impart the polarization characteristic, and has a property in which absorbance in a direction of long axis of molecule and absorbance in a direction of short axis. The dichroic dyes may be dichroic dyes currently developed or to be developed and may contain one or more types of dyes selected from a group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain levelling agents, polymerization initiators, etc. within a range that does not impair the polarization characteristic of a coating film.

The protective layer is provided to preserve the polarization characteristic of the polarizer from a post-processing and external environment, and may be realized in a form such as a protective film.

The protective layer may be formed to come into direct contact with one or both surfaces of the polarizer, but is not limited thereto. For example, the protective layer may be used as a double-layer structure in which one or more protective layers are successively stacked, and may be formed on another member.

The protective layer may be substantially equal to the description of the protective film of the liquid crystal package described above.

The retardation matching layer may be provided to complement optical characteristic of the optical stack, and may be implemented into a form of a retardation film, etc., and a retardation film, etc. currently developed or to be developed may be used therefor. For example, a quarter-wave plate (1/4 wave plate), a half-wave plate (1/2 wave plate), etc. may be used to delay the phase of light, and may be used alone or in combination.

The retardation matching layer may be formed to come into direct contact with one surface of the polarizer, and is not limited thereto. For example, the retardation matching layer may be formed on one surface of the protective layer, and the polarizer, the protective layer, and the retardation matching layer may be successively stacked.

The retardation matching layer may be a polymer stretched film, which is formed by stretching a polymer film that can impart optical anisotropy by stretching in an appropriate manner, or a liquid crystal polymerized film.

According to the embodiment, the polymer stretched film may use a polymer layer including polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, the polymer stretched film may be obtained by forming the polymer material into a film form and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, the extrusion molding and cast molding may be preferably used. At this point, for example, an unstretched film may be extruded by using an extruder to which a T-die, a circular die, etc., are mounted. When a molded product is obtained in the extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The reactive liquid crystal compound may be substantially equal to the description of the liquid crystal compound of the liquid crystal layer described above.

According to one or multiple embodiments, the thickness of the retardation matching layer 130 may be a thickness of between 10µm and 100µm in the polymer stretched film and may be a thickness between 0.1µm and 5µm in the liquid crystal polymerized film.

The refractive index-matching layer is provided to compensate for the refractive index difference of the optical stack by the transparent conductive layer 210, 220, and may serve to improve the visible characteristic by reducing the difference of the refractive index. Furthermore, the refractive index-matching layer may be provided to correct a color based on the transparent conductive layer 210, 220. Meanwhile, when the transparent conductive layer has a pattern, the refractive index-matching layer may correct the transmittance difference of a region with the pattern and a non-pattern region without the pattern.

Specifically, the transparent conductive layer 210, 220 is staked close to other members having a refractive index different therefrom (for example, the polarizer, etc.), and due to the difference of the refractive index between the transparent conductive layer and another layer close thereto, the difference of optical transmittance may be caused. Specifically, when a pattern is formed on the transparent conductive layer, a problem in that the pattern region and the non-pattern region are visually distinguished from each other. Therefore, the refractive index-matching layer is included to compensate for a refractive index, thereby reducing the difference with the optical transmittance of the optical stack. Specifically, when a pattern is formed on the transparent conductive layer, the pattern region and the non-pattern region should be provided so as not to be visually distinguished.

According to the embodiment, the refractive index of the refractive index-matching layer may be appropriately selected according to a material of another adjacent member and may be preferably between 1.4 and 2.6, more preferably may be between 1.4 and 2.4. In this case, it is possible to prevent optical loss due to a sharp difference in the refractive index between another member such as the polarizer and the transparent conductive layer 210, 220.

The refractive index-matching layer is not particularly limited as long as it can prevent the sharply refractive difference between other members, such as the polarizer, etc., and the transparent conductive layer, and may use a compound used in the formation of a refractive index-matching layer currently developed or to be developed. For example, the refractive index-matching layer may be formed from refractive index-matching layer formation composition containing polymerizable isocyanate compound.

According to the embodiment, the polarizing plate 310, 320 may include other functional layers to assist or strengthen the characteristics of the polarizer in addition to the above-mentioned functional layers and, for example, may include an overcoat layer, etc. to further improve the mechanical durability.

According to one or multiple embodiments, the polarizing plate 310, 320 may have a thickness of ranging from 30 to 200 µm, and preferably a thickness ranging from 30 to 170 µm, and more particularly a thickness ranging from 50 to 150 µm. In this case, while the polarizing plate 310, 320 maintains the optical characteristic, the optical stack having a thin thickness can be manufactured.

The variable transmittance optical stack of the present disclosure may include other members without affecting the objectives of the present disclosure and, for example, may include the pressure sensitive adhesive/adhesive layer, and may include an UV absorption layer, a hard coating layer, etc.

The pressure-sensitive adhesive/adhesive layer may be formed using an adhesive or a pressure-sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. The available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper kind of initiator may be selected and used depending on photopolymerization resin.

The pressure-sensitive adhesive may use a pressure-sensitive adhesive currently developed or to be developed. According to one or multiple embodiments, as the pressure-sensitive adhesive, acrylic-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may include acrylic-based pressure-sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer may be appropriately determined depending on a kind of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01 to 50µm in order to ensure sufficient adhesion and minimize the thickness of the optical stack and, preferably, may have a thickness ranging from 0.05 to 20µm and, more preferably, may have a thickness ranging from 0.1 to 10µm.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butyl salicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers currently developed or to be developed may be used thereto.

According to the embodiment, the hard coating layer may be formed by applying compositions for forming a hard coating layer on another member and then hardening the layer with light or heat. The compositions for forming a hard coating layer are not particularly limited and, for example, may include photocurable compounds and a photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional(meth)acrylate, and the photoinitiator may be an oxime ester-based photoinitiator, etc.

### < The smart window and products including the same >

FIG. 5 is a stack structure of a smart window according to an embodiment of the present disclosure.

Referring to FIG. 5, according to the embodiment of the present disclosure, the smart window may include the above-described variable transmittance optical stack, a first glass member 510, and a second glass member 520. For example, the first glass member 510 may be stacked on an upper surface of the first polarizing plate 310 provided in the variable transmittance optical stack, and the second glass member 520 may be stacked on an upper surface of the second polarizing plate 320.

According to some embodiments, a pressure sensitive adhesive/adhesive layer 410, 420 may be arranged between the polarizing plate 310, 320 and the glass member 510, 520. The pressure sensitive adhesive/adhesive layer may be substantially equal to the description of the pressure sensitive adhesive/adhesive layer of the variable transmittance optical stack described above, and may be implemented into a form of pressure sensitive adhesive/adhesive film, such as an EVA film, PVB film, etc., commonly used in the art.

The glass member 510, 520 is not particularly limited, and a usual glass member used in transportation, automobiles, wearable devices, and architectural windows to be described below may be used.

According to the embodiment, in the case of the smart window used in vehicles, the smart window may be formed by attaching glass for a vehicle on both surfaces of the variable transmittance optical stack. For example, the smart window may be manufactured such that the glass for a vehicle is placed on both surfaces of the optical stack and then the glass and the optical stack are heated for 10 to 20 minutes at the temperature of 90°C and a vacuum state of 1 bar by using a press machine. At this point, an adhesive film such as an EVA film, a PVB film, etc. may be used.

According to another embodiment, in the case of a smart window used in a window and door for a building, the smart window may be formed by attaching glass for a building on one or both surfaces of the variable transmittance optical stack. For example, the smart window may be manufactured such that the glass for a building may be attached to one surface of the optical stack in a laminate method, and after both surfaces of the optical stack is applied with the UV adhesive, the glass for a building is bonded to the surfaces and the glass and the optical stack are UV-hardened.

Furthermore, the present disclosure may include transportation including the smart window, for example, a vehicle in which the smart window is applied to a front window, a rear window, a side window, a sunroof window, and/or an inner partition, and wearable devices and a door and window for a building that include the smart window.

## Claims

1. A liquid crystal package comprising:
a first protective film;
a first alignment film formed on one surface of the first protective film;
a second protective film opposing the first protective film;
a second alignment film formed on one surface of the second protective film, and opposing the first alignment film; and
a liquid crystal layer provided between the first alignment film and the second alignment film,
wherein the liquid crystal package has a sealed structure with an outer circumferential surface thereof sealed.

2. The liquid crystal package of claim 1, wherein the sealed structure is achieved by thermosetting sealing.

3. The liquid crystal package of claim 1 or 2, wherein at least a part of regions of the sealed outer circumferential surface has a form protruding outwards from the liquid crystal package.

4. The liquid crystal package of claim 1, 2, or 3, wherein at least a part of regions of the sealed outer circumferential surface has a form that is curved to form a curved surface on the outer circumferential surface of the liquid crystal package.

5. The liquid crystal package of one of claims 1 to 4, wherein at least one protective film from among the first protective film and the second protective film comprises one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

6. The liquid crystal package of one of claims 1 to 5, wherein at least one protective film from among the first protective film and the second protective film has a thickness less than or equal to 50µm.

7. A method for manufacturing the liquid crystal package of any one of claims 1 to 6.

8. A variable transmittance optical stack comprising the liquid crystal package of claim 1, the variable transmittance optical stack comprising:
a first transparent conductive layer and a first polarizing plate that are stacked on an upper surface of the first protective film; and
a second transparent conductive layer and a second polarizing plate that are stacked on an upper surface of the second protective film.

9. The variable transmittance optical stack of claim 8, wherein at least one transparent conductive layer from among the first transparent conductive layer and the second transparent conductive layer is formed to come into direct contact with one polarizing plate from among the first polarizing plate and the second polarizing plate.

10. The variable transmittance optical stack of claim 8 or 9, wherein at least one transparent conductive layer from among the first transparent conductive layer and the second transparent conductive layer comprises one or more types selected from a group consisting of transparent conductive oxide, metal, carbonaceous materials, conductive polymers, conductive ink, and nanowires.

11. The variable transmittance optical stack of one of claims 8 to 10, wherein at least one polarizing plate from among the first polarizing plate and the second polarizing plate comprises one or more types selected from a group consisting of a protective layer, a retardation matching layer, and a refractive index-matching layer.

12. The variable transmittance optical stack of one of claims 8 to 11, wherein at least one polarizing plate from among the first polarizing plate and the second polarizing plate has a thickness ranging from 30 to 200µm.

13. The variable transmittance optical stack of one of claims 8 to 12, further comprising:
one or more types selected from a group consisting of an overcoat layer, a pressure sensitive adhesive/adhesive layer, and an ultraviolet ray absorption layer.

14. A smart window comprising the variable transmittance optical stack of any one of claims 8 to 13.

15. A means of transportation comprising the smart window of claim 14.
